# EUROPEAN PATENT SPECIFICATION

(11) **EP 0 776 751 B1**
(45) Date of publication and mention of the grant of the patent: **21.02.2001**
(21) Application number: 96117680.7
(22) Date of filing: 05.11.1996
(51) Int. Cl.: B29C 47/10, C08L 83/04, C08K 3/36

(54) **Method of manufacturing mixtures of polydiorganosiloxanes and silica**
Verfahren zur Herstellung von Mischungen aus Polydiorganosiloxanen und Silica
Procédé de préparation de mélanges de polydiorganosiloxanes et de silice

(30) Priority: 30.11.1995 JP 33607995
(43) Date of publication of application: 04.06.1997
(73) Proprietor: Dow Corning Toray Silicone Company Ltd., Tokyo (JP)
(72) Inventor: Aoyama, T., Dow Corning Toray Silicone Co., Ltd., Ichihara-shi, Chiba Pref. (JP); Yamadera, T., Dow Corning Toray Silicone Co., Ltd., Ichihara-shi, Chiba Pref. (JP)
(74) Representative: Fleischer, Holm Herbert, Dr.

(56) References cited:
- EP-A- 0 117 395
- EP-A- 0 305 032
- EP-A- 0 462 032
- EP-A- 0 568 891
- EP-A- 0 691 373
- NL-A- 6 806 477
- US-A- 4 394 980
- US-A- 4 649 005
- US-A- 5 013 772
- US-A- 5 057 151
- PATENT ABSTRACTS OF JAPAN vol. 008, no. 148 (M-308), 11 July 1984 & JP 59 045109 A (TOSHIBA KIKAI KK), 13 March 1984,
- PATENT ABSTRACTS OF JAPAN vol. 010, no. 182 (C-356), 25 June 1986 & JP 61 028435 A (SUMITOMO HEAVY IND LTD), 8 February 1986,
- PATENT ABSTRACTS OF JAPAN vol. 011, no. 255 (M-617), 19 August 1987 & JP 62 062724 A (SEKISUI PLASTICS CO LTD), 19 March 1987,

## Description

This invention provides a method of continuous manufacture of mixtures of polydiorganosiloxanes and silica. These mixtures are widely used as silicone rubber bases, defoaming agents, and greases.

Polydiorganosiloxanes are hydrophobic and silica is hydrophilic, for which reason they are difficult to mix. To facilitate mixing, silica is typically treated with a hydrolyzable hexaorganodisiloxane in the presence of water. A method of mixing in a trough mixer is extremely common for such a process. Most recently, a mixing method has been proposed in which a liquid polydiorganosiloxane, silica, hexaorganodisiloxane, and water are continuously introduced from four or more different ports in a biaxial continuous extruding and mixing machine JP-A 7-37062.

Extruder having inlets for simultaneous continuous feeding of a plurality of components such as pulverulent solids and liquids are known from US-A-4,394,980; JP-A-59 045 109 and JP-A-610 29 435.

From EP-A-462 032 the preparation of a mixture of a high density polydiorganosiloxane, silica, a hydrolyzable organosilicon compound, and water using a double screw extruder. The components are injected into at least four different inlets of said extruder.

However, silicas such as fumed silica and silica obtained the precipitation method are of extremely low bulk density and readily tend to be scattered. This causes the problem that it not easy to introduce it rapidly into the raw material inlet of biaxial continuous extruding and mixing machine without being scattered into the surrounding area. There is also the problem that mixing efficiency is poor.

The problem solved by this invention is to make it possible to introduce silica rapidly into a biaxial continuous extruding and mixing machine without it being scattered to the surroundin area, and to also facilitate mixing of the polydiorganosiloxane and silica when mixtures of the two substances are continuously manufactured.

This object is attained by a method of manufacturing mixtures of polydiorganosiloxanes and silica by continuously introducing
(A) 100 parts by weight of a liquid polydiorganosiloxane,
(B) from 5 to 80 parts by weight of silica,
(C) from 0.75 to 20 parts by weight of a hydrolyzable organosilicon compound and
(D) from 0.1 to 8 parts by weight of water
into a raw material inlet (II) of a biaxial continuous extruding and mixing machine (I) and extruding the mixtures through a discharge outlet at the opposite side of the base in the lengthwise direction of the barrel said machine (I), characterized by using an extruder having a double lumen inlet tube with an inner lumen (IV) and an outer lumen (III) and introducing the liquid polydiorganosiloxane (A) through the outer lumen (III) and the silica (B), the hydrolyzable organosilicon compound (C) and the water (D) through the inner lumen (IV) of said double lumen tube.

As a result of an intensive research, this invention was perfected by discovering that, when liquid polydiorganosiloxane is introduced into the raw material through the outer lumen of a double lumen tube, and when the silica, the hydrolyzable organosilicon compound, and the water is introduced through the inner lumen of a double lumen tube, the silica filler can be introduced rapidly without scattering and the two substances can be easily mixed.

A representative biaxial continuous extruding and mixing machine that is used in this invention is a device in which two, rotating screws rotate in synchronization, in the same or different directions, and are arranged in parallel in a barrel. The raw material inlet is installed in the base in the lengthwise direction so its opening faces upwards, and the double lumen tube for introducing the liquid polydiorganosiloxane is installed in the raw material inlet.

The liquid polydiorganosiloxane is in a liquid state when it is introduced. Consequently, when it is in the form of a raw rubber at normal room temperature, it is preheated to a liquid state, or the outer lumen of the double lumen tube is heated from the outside.

The inside diameters and lengths of the outer lumen and inner lumen of the double lumen tube are set appropriately for the viscosity of the liquid polydiorganosiloxane, the bulk density of the silica, and the compounding ratio of the two substances.
The hydrolyzable organosilicon compound and the water are both introduced into the raw material inlet. Both substances may be introduced through one tube after having been mixed in advance, or they may be introduced through separate tubes. In either case, the tip of the tube should open into the inner lumen of the double lumen tube. When this is done, tne hydrolyzable organosilicon compound and the water directly strike or come into contact with the silica and increase the efficiency of the hydrophobic treatment.

The outlet for the mixed material is on the opposite side of the base in the lengthwise direction of the barrel.

The mixing component is in the region between the base of the barrel and the outlet. An inlet for the adding of additional liquid polydiorganosiloxane may also be installed here.

The L/D ratio of the screw is from 20 to 50, and, preferably, from 35 to 50. Here, L indicates the length of the screw and D indicates the diameter of the screw. The peripheral velocity of the screw is from 0.2 to 1.7 m/s, and, preferably, 0.5 to 1.5 m/s.

The polydiorganosiloxanes that are used in this invention may be in liquid form when they are introduced into the raw material inlet, or they may be in the form of raw rubber at normal room temperature and become liquid when heated. Therefore, they may be preheated to form a liquid, or the outer lumen of the double lumen tube can be heated to make them liquid.

The polydiorganosiloxane may be straight chain, straight chain with some branches, or cyclic in structure. When they are for silicone rubber, it is preferable that they be a straight chain.

Examples of the organic groups that are bonded with the silicon atoms of the polydiorganosiloxane include alkyl groups such as methyl, ethyl, propyl, and butyl; alkenyl groups such as vinyl, allyl, and 1-propenyl; substituted alkyl groups such as 2-phenylmethyl, 2-phenylethyl, and 3,3,3-trifluoropropyl; and aryl groups such as phenyl or tolyl. The aforementioned organic groups and hydroxyl groups are examples of groups that are bonded to the terminal silicon atoms of the polymer chains.

When the liquid polydiorganosiloxane is for formation of an addition reaction type silicone rubber, it is necessary to have two or more silicon-bonded alkenyl groups, for example, vinyl groups, in one molecule.

The viscosity of the liquid polydiorganosiloxane when it is introduced is from 0.3 to 50 Pa·s at 25°C from the standpoint of miscibility.

The silica that is used in this invention is a reinforced silica filler having a specific surface area greater than 40 m²/g, and generally of 50 m²/g to 300 m²/g, from the standpoint of displaying the scatter inhibiting effect of this invention. Fumed silica of a specific surface area greater than 100 m²/g is preferred.

The hydrolyzable organosilicon compound that is used in this invention is a liquid compound at ordinary temperature and pressure, i.e., at a temperature of 25°C and a mercury pressure of 101.1kPa (760 mm Hg). These organosilicon compounds are represented by general formula (R¹₃Si(OSiR²R³)ₐ)₂NH, were, R¹, R² and R³ are monovalent hydrocarbon groups which may be the same or different, and a is an integer of 0 to 50. From the standpoint of treatment efficiency, hexaorganodisilazanes such as hexamethyldisilazane or tetramethyldivinyldisilazane are preferred when a is 0. The hydrolyzable organosilicon compound is hydrolyzed and bonds with the silica filler when it comes into contact with water, acting to make the silica hydrophobic.

The compounding ratios of the aforementioned components are set by the desired properties of the mixed material, and there are no particular limitations on them. From the standpoint of miscibility, 5 to 80 parts by weight of component (B) may be compounded per 100 parts by weight of component (A); the quantity of component (C) is set in accordance with the quantity of component (B), its specific surface area and its silanol group content; and the quantity of component (D) may be greater than the quantity sufficient to hydrolyze component (C). In general, the quantity of component (C) is from 0.75 to 20 parts by weight, per 100 parts of component (A), and the quantity of component (D) is from be 0.1 to 8 parts by weight, per 100 parts of component (A).

Figure 1 is a schematic cross-sectional view of the region surrounding the raw material inlet of a biaxial continuous extruding and mixing machine that is used in the examples of this invention.

Figure 2 is a schematic cross-sectional view of the mixing machine used in the examples and its accessory equipment.

The labels for the figures are as follows:
- I: biaxial continuous extruding and mixing machine
- II: raw material inlet
- III: outer lumen
- IV: inner lumen
- V: pipe
- 1: barrel
- 2: screw
- 3: drive component
- 4: double lumen tube
- 5: inlet
- 6: discharge outlet
- 7: continuous supply device
- 8: storage tank
- 9: pump
- 10: branch valve
- 11: storage tank
- 12: storage tank
- 13: pump
- 14: pump
- 15: transport component of biaxial continuous extruding and mixing machine
- 16: upstream side kneading component of biaxial continuous extruding and mixing machine
- 17: downstream side mixing component of biaxial continuous extruding and mixing machine
- 18: electric heater
- 19: electric heater
- 20: pressure regulating valve
- 21: vent outlet
- 22: vent outlet
- 23: condenser
- 24: vacuum pump

Figure 1 shows a representative example of the method of introducing the components of this invention. The liquid polydiorganosiloxane (A) is introduced through outer lumen III of double lumen tube 4 into raw material inlet II of the biaxial continuous extruding and mixing machine I. Silica filler (B) is introduced through inner lumen IV of double lumen tube 4 into raw material inlet II of the same mixing machine I. Hydrolyzable organosilicon compound (C) and water (D) may be mixed in advance and introduced through pipe V into raw material inlet II, or they may be supplied through separate pipes to raw material inlet II of mixing machine I. In either case, from the standpoint of treatment effectiveness, it is desirable that they pass through inner lumen IV of double lumen tube 4 so they directly strike or come into contact with the silica that is supplied.

The biaxial continuous extruding and mixing machine I that was used in our examples had a screw diameter of 72 mm, an L/D ratio of 47 and a screw rotation speed of 500 rotations per minute.

Examples. The components indicated below were supplied continuously in the weight ratios indicated to the biaxial continuous extruding and mixing machine I as described in the above Figures:
(A) 100 parts by weight of polydimethylsiloxane having a viscosity of 10 Pa·s at 25°C with both terminals blocked with dimethylvinylsiloxy groups (vinyl group content of 0.135 wt %)
(B) 45 parts by weight of fumed silica having a specific surface area of 200 m²/g
(C) 10.3 parts by weight of hexamethyldisilazane, and
(D) 2.6 parts by weight of water.

In Figure 2, 1 is the barrel in which 2 screws are installed in parallel. The two screws are rotated in synchronization in the same direction by drive component 3. Double lumen tube 4, for the purpose of introducing the polydimethylsiloxane and the fumed silica, is installed at the raw material inlet II at the base of barrel 1. Inlet 5, for the purpose of introducing additional polydimethylsiloxane, is installed at the center of barrel 1, and discharge outlet 6, for the purpose of discharging the mixed material, is installed at the end of barrel 1. Continuous supply device 7 is for the purpose of continuously supplying fumed silica, which is easily scattered, to inner lumen IV of double lumen tube 4. Continuous supply device 7 may be in the form of a belt or screw.

Component 8 is the storage tank for the liquid polydimethylsiloxane. The polydimethylsiloxane is suctioned by pump 9 inside the pipe and is fed at a constant ratio by branch valve 10, with 80 percent of it being supplied to the outer lumen III of double lumen tube 4, and the remaining 20 percent being supplied to inlet 5.

Component 11 is the storage tank for the water and component 12 is the storage tank for hexamethyldisilazane. The liquid raw materials in storage tanks 11 and 12 are suctioned through the pipes by the respective pumps 13 and 14 and merge in the course of their flow. They then pass through the side of double lumen tube 4 and are introduced so that they strike the silica filler that is passing through inner lumen IV of double lumen tube 4. At this point, the hexamethyldisilazane and the water may be passed separately through the piping and be introduced into inner lumen IV of double lumen tube 4.

The transport component 15, which primarily transports the introduced raw materials, is located on the upstream side of screw 2 which is connected to raw material inlet II and mixing components 16 and 17, which primarily effect mixing, are connected to transport component 15. Electric heaters 18 and 19 are employed, respectively, in the mixing of components 16 and 17 to heat said mixing components to 50 to 300°C. Open vent outlet 21, the pressure of which is adjusted to a fixed pressure by pressure regulation valve 20, is installed at the end of kneading component 16 on the upstream side, and the vent outlet 22 is installed at the end of mixing component 17 on the downstream side. The latter vent outlet 22 is connected to vacuum pump 24 via condenser 23 and the volatile components in the barrel (for example, ammonia that is produced by hydrolysis of hexamethyldisilazane) is removed by means of vacuum pump 24. to

The L/D ratio to raw material inlet (II) was 1 to 6, the L/D ratio to inlet (5) was 23 to 26, the LID ratio to open vent outlet (21) was 20 to 22, the L/D ratio to vent outlet (22) was 40 to 43 and the L/D ratio to discharge outlet (6) was 47.

Initially, cooling was effected and the temperature of the biaxial continuous extruding and mixing machine was maintained below 50°C. The L/D ratio in barrel 1 was set from 13 to an L/D ratio of 47 and the temperature was raised continuously. As condition 1, the temperature was raised from 80°C to 280°C. As condition 2, the temperature was raised from 50°C to 280°C. As condition 3, the temperature was raised from 50°C to 200°C.

The average retention time of the various raw materials introduced through raw material inlet II in the biaxial continuous extruding and mixing machine I was 90 seconds. Table 1 shows the findings for the viscosities of liquid silicone rubber bases manufactured under the three conditions described. Also reported are the findings for liquid silicone rubber bases manufactured by heating and mixing the same raw materials at the same compounding ratios using a conventional trough mixer. When the viscosity of samples treated under condition 3 was determined after storage at room temperature for 1.5 months, it was determined to be 12.4 Pa·s at 25°C, with essentially no thickening occurring. In addition, 0.83 part by weight of polymethylhydrogensiloxane (viscosity, 0.01 Pa·s at 25°C), both terminals of which were blocked by trimethylsiloxy groups as a crosslinking agent; 0.000275 part by weight of a complex of chloroplatinic acid and tetramethyldivinyldisilazane as a curing catalyst; and 0.014 part by weight of 3,5-dimethyl-1-hexen-3-ol as a cure inhibitor were added to 100 parts by weight of the liquid silicone rubber bases manufactured above. Thus, curable compositions were prepared according to our invention and according to the art using a conventional trough mixer, and these compositions were mixed until they were uniform. The materials were then heated and cured to form sheets. The curing conditions were 150°C for 10 minutes under pressure. Table 1 shows the results of determinations of the physical properties of the sheet-shaped silicone rubbers. Initial viscosity was determined by introducing the liquid silicone rubber base under pressure into a cylinder for viscosity determination after it had been mixed in a table model mixer, pressing down the plunger, and determining the weight of the beads that were discharged from the nozzle within a specified time. Apparent viscosity was then calculated by the Hagen-Poiseuille equation.

Viscosities after the materials had been allowed to stand for 1.5 months were also determined and calculated under the same conditions as described above.

**Table 1**

| | Condition | | | |
|---|---|---|---|---|
| | 1 | 2 | 3 | Trough Mixer |
| Durometer (JIS A) | 43 | 42 | 40 | 45 |
| Viscosity, Pa·s at 25°C | 15.6 | 14.8 | 9.7 | 28 |
| Elongation (%) | 610 | 620 | 650 | 640 |
| Tensile, kg/cm² | 95 | 97 | 80 | 100 |
| Tear. kg/cm | 22 | 27 | 25 | 21 |

The above properties were measured according to JIS K6301.

## Claims

1. A method of manufacturing mixtures of polydiorganosiloxanes and silica by continuously introducing
(A) 100 parts by weight of a liquid polydiorganosiloxane,
(B) from 5 to 80 parts by weight of silica,
(C) from 0.75 to 20 parts by weight of a hydrolyzable organosilicon compound and
(D) from 0.1 to 8 parts by weight of water into a raw material inlet (II) of a biaxial continuous extruding and mixing machine (I) and extruding the mixtures through a discharge outlet (6) at the opposite side of the base in the lengthwise direction of the barrel (1) of said machine (I),
characterized by
using an extruder having a double lumen inlet tube (4) with an inner lumen (IV) and an outer lumen (III) and introducing the liquid polydiorganosiloxane (A) through the outer lumen (III) and the silica (B), the hydrolyzable organosilicon compound (C) and the water (D) through the inner lumen (IV) of said double lumen tube (4).

2. The method of Claim 1, wherein the liquid polydiorganosiloxane (A) has two or more silicon-bonded alkenyl groups in one molecule, the silica (B) has a specific surface area greater than 40 mg/g, and the hydrolyzable organosilicon compound has the general formula (R¹₃Si[OSiR²R³]ₐ)₂NH, where R¹, R², and R³ are monovalent hydrocarbon groups which may be the same or different and a is an integer of 0 to 50.

3. The method of claim 2, wherein the hydrolyzable organosilicon compound is a hexaorganodisilazane.

4. The method of any of claims 2 to 3, wherein the polydiorganosiloxane (A) is a dimethylvinylsiloxy end-blocked polydimethylsiloxane having a viscosity of 0.3 to 50 Pa·s at 25 °C, the silica (B) is a precipitated silica having a specific surface area of 50 to 300 m²/g, and the hydrolyzable organosilicon compound (E) is selected from hexamethyldisilazane or tetramethyldivinyldisilazane.

5. The method of any of claims 1 to 4, wherein the mixture is mixed at a temperature of 50 to 300°C.

6. The method of claim 1, wherein the biaxial continuous extruding and mixing machine (I) comprises a screw (2) having a length to diameter ratio (L/D ratio) of 35 to 50 and is rotated where the peripheral velocity of the screw (2) is from 0.5 to 1.5 m/s.

## Patentansprüche

1. Verfahren zum Herstellen von Mischungen von Polydiorganosiloxanen und Kieselsäure durch kontinuierliches Einbringen von
(A) 100 Gewichtsteilen eines flüssigen Polydiorganosiloxans,
(B) 5 bis 80 Gewichtsteilen Kieselsäure,
(C) 0,75 bis 20 Gewichtsteilen einer hydrolysierbaren Organosiliciumverbindung und
(D) 0,1 bis 8 Gewichtsteilen Wasser in einen Ausgangsmaterialeinlaß (II) einer biaxial kontinuierlich extrudierenden und mischenden Maschine (I) und Extrudieren und Mischen durch eine Austragsöffnung (6) an der gegenüberliegenden Seite der Basis in Längsrichtung des Mantels (1) der Maschine (I),
gekennzeichnet durch Verwenden eines Extruders mit einem zweilumigen Einlaßrohr (4) mit einem inneren Lumen (IV) und einem äußeren Lumen (III) und Einbringen des flüssigen Polydiorganosiloxans (A) durch das äußere Lumen (III) und Kieselsäure (B), hydrolysierbarer Organosiliciumverbindung (C) und Wasser (D) durch das innere Lumen (IV) des zweilumigen Rohres (4).

2. Verfahren nach Anspruch 1, dadurch gekennzeichnet, daß das flüssige Polydiorganosiloxan (A) zwei oder mehr an Silicium gebundene Alkenylgruppen in einem Molekül aufweist, die Kieselsäure (B) eine spezifische Oberfläche von größer als 40 m²/g hat und die hydrolysierbare Organosiliciumverbindung die allgemeine Formel R¹₃Si[OSiR²R³]ₐ)₂NH aufweist, in der R¹, R² und R³ einwertige Kohlenwasserstoffreste sind, die gleich oder unterschiedlich sein können, und a eine ganze Zahl von 0 bis 50 ist.

3. Verfahren nach Anspruch 2, dadurch gekennzeichnet, daß die hydrolysierbare Organosiliciumverbindung ein Hexaorganodisilazan ist.

4. Verfahren nach einem der Ansprüche 2 bis 3, dadurch gekennzeichnet, daß das Polydiorganosiloxan (A) ein Polydimethylsiloxan mit endständigen blockierenden Dimethylvinylsiloxygruppen ist mit einer Viskosität von 0,3 bis 50 Pa·s bei 25°C, die Kieselsäure (B) ist gefällte Kieselsäure mit einer spezifischen Oberfläche von 50 bis 300 m²/g und die hydrolysierbare Organosiliciumverbindung (E) ist ausgewählt aus Hexamethyldisilazan oder Tetramethyldivinyldisilazan.

5. Verfahren nach einem der Ansprüche 1 bis 4, dadurch gekennzeichnet, daß die Mischung bei einer Temperatur von 50 bis 300°C gemischt wird.

6. Verfahren nach Anspruch 1, dadurch gekennzeichnet, daß die biaxial kontinuierlich extrudierende und mischende Maschine (I) eine Schnecke (2) enthält, die ein Längen:Durchmesserverhältnis (L/D Verhältnis) von 35 bis 50 aufweist und mit einer Umfangsgeschwindigkeit der Schnecke (2) von 0,5 bis 1,5 m/s rotiert.

## Revendications

1. Procédé de fabrication de mélanges de polydiorgano-siloxanes et de silice, en introduisant en continu
(A) 100 parties en poids d'un polydiorganosiloxane liquide,
(B) de 5 à 80 parties en poids de silice,
(C) de 0,75 à 20 parties en poids d'un composé organosilicié hydrolysable et
(D) de 0,1 à 8 parties en poids d'eau
dans une entrée de matière première (II) d'une machine à extruder et mélanger continue biaxiale (I) et en extrudant les mélanges à travers une ouverture de sortie (6) au côté opposé de la base dans le sens de la longueur du fourreau (1) de ladite machine (I),
caractérisé par l'utilisation d'une extrudeuse ayant un tube d'entrée à deux canaux (4), avec un canal interne (IV) et un canal externe (III), et l'introduction du polydiorganosiloxane liquide (A) par le canal externe (III), et de la silice, du composé organosilicié hydrolysable (C) et de l'eau (D) par le canal interne (IV) dudit tube à deux canaux (4).

2. Procédé selon la revendication 1, dans lequel le polydiorganosiloxane liquide (A) a deux ou plusieurs groupes alcényles liés au silicium dans une molécule, la silice (B) a une surface spécifique supérieure à 40 m²/g et le composé organosilicié hydrolysable a la formule générale (R¹₃Si [OSiR²R³]ₐ)₂NH, où R¹, R² et R³ sont des groupes hydrocarbonés monovalents qui peuvent être identiques ou différents et a est un entier de 0 à 50.

3. Procédé selon la revendication 2, dans lequel le composé organosilicié hydrolysable est un hexaorganodisilazane.

4. Procédé selon l'une quelconque des revendications 2 à 3, dans lequel le polydiorganosiloxane (A) est un polydiméthylsiloxane bloqué terminalement par des groupes diméthylvinylsiloxy ayant une viscosité de 0,3 à 50 Pa.s à 25 °C, la silice (B) est une silice précipitée ayant une surface spécifique de 50 à 300 m²/g et le composé organosilicié hydrolysable (E) est choisi parmi l'hexaméthyldisilazane et le tétraméthyldivinyldisilazane.

5. Procédé selon l'une quelconque des revendications 1 à 4, dans lequel le mélange est malaxé à une température de 50 à 300 °C.

6. Procédé selon la revendication 1, dans lequel la machine à extruder et mélanger continue biaxiale (I) comprend une vis (2) ayant un rapport longueur à diamètre (rapport L/D) de 35 à 50 et tourne avec une vitesse périphérique de la vis (2) de 0,5 à 1,5 m/s.
